(19) Europäisches Patentamt European Patent Office Office européen des brevets

(11) **EP 3 032 284 A1**

(12) **EUROPEAN PATENT APPLICATION**

(43) Date of publication:
**15.06.2016 Bulletin 2016/24**

(51) Int Cl.:
***G01V 1/30*** *(2006.01)*

(21) Application number: **14290382.2**

(22) Date of filing: **12.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Services Pétroliers Schlumberger**
**75007 Paris (FR)**
Designated Contracting States:
**FR**
• **Schlumberger Holdings Limited**
**Road Town, Tortola 1110 (VG)**
Designated Contracting States:
**GB NL**
• **Schlumberger Technology B.V.**
**2514 JG The Hague (NL)**
Designated Contracting States:
**AL AT BE BG CH CY CZ DE DK EE ES FI GR HR HU IE IS IT LI LT LU LV MC MK MT NO PL PT RO RS SE SI SK SM TR**

(72) Inventors:
• **Legendre, Fabienne**
**92140 Clamart (FR)**
• **Legendre, Emmanuel**
**92140 Clamart (FR)**

(74) Representative: **Leonori, Céline**
**Etudes et Productions Schlumberger**
**Intellectual Property Department**
**1, rue Henri Becquerel**
**B.P. 202**
**92142 Clamart Cedex (FR)**

(54) **System and method for compensation in a resistivity detection**

(57) The disclosure relates to a downhole electrical resistivity measurement tool including a first, a second, and a third transmitter antenna mounted on a body and at least one receiver mounted on the body for measuring currents generated by the transmitter antennas. Additionally, the downhole electrical resistivity measurement tool includes a data processing system. The data processing system may generate, from a linear combination of current measurements generated by the second and the third transmitter antennas and received by the receiver, a first virtual transmitter antenna at a corresponding virtual location on the body. The first virtual transmitter antenna provides data equivalent to current signals generated by an additional transmitter antenna at the virtual location and received by the receiver. The data processing system may also estimate a resistivity of a geological formation as a function of the current measurements generated by two antennas, including the first virtual transmitter antenna.

FIG. 3

EP 3 032 284 A1

**Description**

**BACKGROUND**

This disclosure relates to a tool used for measuring electrical resistivity in a geological formation surrounding a borehole of a drilling operation.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as an admission of any kind.

Identifying the composition of a geological formation can provide information about the likely presence or absence of hydrocarbons in a well. As such, many downhole tools have been developed that attempt to analyze the geological formation from within a wellbore. Electrical resistivity tools are one type of downhole tool that may be used to measure the electrical resistivity of the geological formation. By measuring the electrical resistivity through the geological formation, the composition of the geological formation may be ascertained at various depths through the well.

Two or more antennas may act as electric dipoles while surrounding a receiver sensor (e.g., a receiver button or a receiver ring). The antennas may be positioned asymmetrically about the receiver sensor. Using some number of antennas N, some downhole tools may have N-1 depths of investigation available for electrical resistivity readings. Thus, a limited amount of information may be recorded with those antennas.

**SUMMARY**

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, a downhole electrical resistivity measurement tool includes at least a first, a second, and a third transmitter antenna mounted on a body and at least one receiver mounted on the body for measuring currents generated by the transmitter antennas. Additionally, the downhole electrical resistivity measurement tool includes a data processing system. The data processing system may generate, from a linear combination of current measurements generated by the second and the third transmitter antennas and received by the receiver, at least a first virtual transmitter antenna at a corresponding virtual location on the body. The first virtual transmitter antenna may provide data equivalent to current signals generated by an additional transmitter antenna at the virtual location and received by the receiver. The data processing system may also estimate a resistivity of a geological formation as a function of the current measurements generated by two antennas, including the first virtual transmitter antenna.

In another embodiment, a method may include placing a downhole tool in a wellbore in a geological formation. The downhole tool may comprise at least a first, a second, and a third transmitter antenna mounted on a body, and at least one receiver mounted on the body for measuring currents generated by the transmitter antennas. Additionally, the method may include firing the transmitter antennas to generate transmitter currents, measuring the transmitter currents at the at least one receiver, and generating virtual signals from the transmitter currents representing a first virtual transmitter antenna. Further, the method may include estimating electrical resistivity of the geological formation as a function of current measurements generated by two antennas, including the first virtual transmitter antenna.

In another embodiment, a logging while drilling system, includes at least two transmitter toroid antennas and a receiver mounted on a drill collar. The transmitter toroid antennas may be mounted asymmetrically on each side of the receiver. Additionally, the logging while drilling system includes a data processing system to receive current measurements from the receiver generated by the transmitter toroid antennas. The data processing system also generates virtual signals to represent virtual transmitter antennas and provide symmetry to the transmitter toroid antennas, and the data processing system generates a number of electrical resistivity measurements of a geological formation equal to a number of the transmitter toroid antennas via symmetrical pairs of the current measurements and the virtual signals.

Various refinements of the features noted above may be undertaken in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended to familiarize the reader with certain aspects and contexts of embodiments of the present disclosure without limitation to the claimed subject matter.

## BRIEF DESCRIPTION OF THE DRAWINGS

Various aspects of this disclosure may be better understood upon reading the following detailed description and upon reference to the drawings in which:

FIG. 1 is a schematic diagram of an example of a logging system that determines characteristics of a geological formation using a downhole electrical resistivity measurement device, in accordance with an embodiment of the disclosure;

FIG. 2 is a schematic view of the downhole electrical resistivity measurement device mounted on a drill collar to measure an electrical resistivity of the geological formation with transmitter toroid antennas surrounding a receiver button, in accordance with an embodiment of the disclosure;

FIG. 3 is a schematic view of the downhole electrical resistivity measurement device mounted on the drill collar to measure the electrical resistivity of the geological formation with the transmitter toroid antennas and virtual transmitter antennas surrounding the receiver button, in accordance with an embodiment of the disclosure;

FIG. 4 is a flowchart of a method for generating resistivity measurements with a linear combination of transmitter signals fired individually from the transmitter toroid antennas and utilized to generate the virtual transmitter antennas, in accordance with an embodiment of the disclosure;

FIG. 5 is a flowchart of a method for generating resistivity measurements with transmitter signals fired simultaneously from the transmitter toroid antennas and utilized to generate the virtual transmitter antennas, in accordance with an embodiment of the disclosure;

FIG. 6 is a graph of a response of the electrical resistivity measurement device as a function of invasion radius for an azimuthal resistivity measurement and a non-azimuthal toroid measurement, comparing a conventional device and a device according to the disclosure;

FIG. 7 is a set of graphs of electrical resistivity of geological formations as a function of depth from a borehole using standard focused measurements; and

FIG. 8 is a set of graphs of electrical resistivity of the geological formations of FIG. 7 as a function of the depth from the borehole using symmetrized focused measurement, in accordance with an embodiment of the disclosure

## DETAILED DESCRIPTION

One or more specific embodiments of the present disclosure will be described below. These described embodiments are examples of the presently disclosed techniques. Additionally, in an effort to provide a concise description of these embodiments, features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Embodiments of the present disclosure relate to two or more antennas used downhole on a downhole electrical resistivity measurement device. The antennas may include transmitter toroid antennas disposed along a drill collar and positioned asymmetrically along either side of a receiver. In operation, the downhole electrical resistivity measurement device may generate a virtual transmitter antenna. The virtual transmitter antenna may operate in a manner equivalent to a transmitter toroid antenna disposed opposite each of the transmitter toroid antennas physically present on either side of the receiver. In using combinations of the transmitter toroid antennas and the virtual transmitter antennas, the downhole electrical resistivity measurement device may provide an additional depth of investigation of resistivity of a geological formation surrounding a borehole of a drilling operation over a resistivity measurement device not using the virtual transmitter antennas (e.g., a non-symmetrical electrical resistivity measurement device). Accordingly, generation of the virtual transmitter antennas enables an additional resistivity measurement investigation depth without modifying a mechanical or electrical architecture of an existing downhole electrical resistivity measurement device.

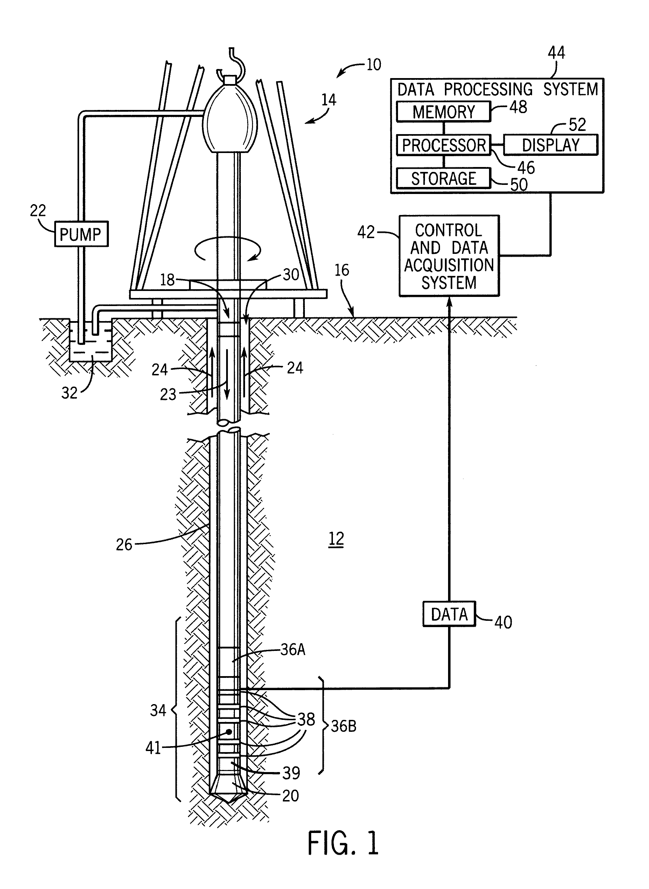

With this in mind, FIG. 1 illustrates a drilling system 10 capable of measuring electrical resistivity of a geological formation 12 to determine a composition of the geological formation 12. The drilling system 10 may be used to drill a well into the geological formation 12 and obtain resistivity logging measurements useful to identify characteristics of the geological formation 12. In the drilling system 10, a drilling rig 14 at the surface 16 may rotate a drill string 18 having a drill bit 20 at its lower end. As the drill bit 20 is rotated, a drilling fluid pump 22 is used to pump drilling fluid 23, which may be referred to as "mud" or "drilling mud," downward through the center of the drill string 18 in the direction of the arrow to the drill bit 20. The drilling fluid 23 may be a saltwater based drilling fluid that is electrically conductive. The drilling fluid 23, which is used to cool and lubricate the drill bit 20, exits the drill string 18 through the drill bit 20 to become return drilling fluid 24. The return drilling fluid 24 then carries drill cuttings away from the bottom of a wellbore 26 (i.e., a borehole) as it flows back to the surface 16, as shown by the arrows through an annulus 30 between the drill string 18 and the formation 12. However, as described above, as the drilling fluid 23 flows through an annulus 30 between the drill string 18 and the geological formation 12, the return drilling fluid 24 may begin to invade and mix with the fluids stored in the formation, which may be referred to as formation fluid (e.g., natural gas or oil). At the surface 16, return drilling fluid 24 is filtered and conveyed back to a mud pit 32 for reuse.

As illustrated in FIG. 1, the lower end of the drill string 18 includes a bottom-hole assembly (BHA) 34 that may include the drill bit 20 along with various downhole tools. The downhole tools may collect a variety of information relating to the geological formation 12 and/or the state of drilling of the well. For instance, a measurement-while-drilling (MWD) tool 36A may measure certain drilling parameters, such as the temperature, pressure, orientation of the drilling tool, and so forth. Likewise, a logging-while-drilling (LWD) tool 36B may measure the physical properties of the geological formation 12, such as density, porosity, resistivity, lithology, and so forth. The MWD tool 36A and/or the LWD tool 36B may include two or more transmitter toroid antennas 38 that emit and/or detect current signals. For example, in the illustrated embodiment, the LWD tool 36B includes several of the transmitter toroid antennas 38 mounted on a drill collar 39. The drill collar 39 may include a metal or conductive pipe mounted on the drill string 18 above the drill bit 20.

The MWD tool 36A and/or the LWD tool 36B may collect a variety of data 40 at a receiver 41, described in more detail below, that may be stored and processed in the BHA 34 or, as illustrated in FIG. 1, may be sent to the surface 16 for processing. In the example of this disclosure, the MWD tool 36A and/or the LWD tool 36B may function as a resistivity logging tool that emits and/or detects current signals transmitted through the geological formation 12 via the transmitter toroid antennas 38 and received by the receiver 41 and or the transmitter toroid antennas 38 operating as receivers. The data 40 that is collected may include changes in the electrical resistivity of the geological formation 12, which may represent information relating to characteristics of the geological formation 12. The data 40 may be sent via a control and data acquisition system 42 to a data processing system 44. The control and data acquisition system 42 may receive the data 40 in any suitable way. In one example, the control and data acquisition system 42 may transfer the data 40 via electrical signals pulsed through the geological formation 12 or via wireless pulse telemetry using the return drilling fluid 24. In another example, the data 40 may be retrieved directly from the MWD tool 36A and/or the LWD tool 36B upon return of the tools 36A and 36B to the surface 16.

The data processing system 44 may include a processor 46, memory 48, storage 50, and/or a display 52. The data processing system 44 may use the data 40 to determine various properties of the well using any suitable techniques. To process the data 40, the processor 46 may execute instructions stored in the memory 48 and/or storage 50. As such, the memory 48 and/or the storage 50 of the data processing system 44 may be any suitable article of manufacture that can store the instructions. The memory 46 and/or the storage 50 may be ROM memory, random-access memory (RAM), flash memory, an optical storage medium, or a hard disk drive, to name a few examples. The display 52 may be any suitable electronic display that can display the logs and/or other information relating to properties of the well as measured by the MWD tool 36A and/or the LWD tool 36B. It should be appreciated that, although the data processing system 44 is shown by way of example as being located at the surface 16, the data processing system 44 may be located in the MWD tool 36A and/or the LWD tool 36B. In such embodiments, some of the data 40 may be processed and stored downhole, while some of the data 40 may be sent to the surface 16 in real time. This may be the case particularly in LWD, where a limited amount of the data 40 may be transmitted to the surface 16 during drilling.

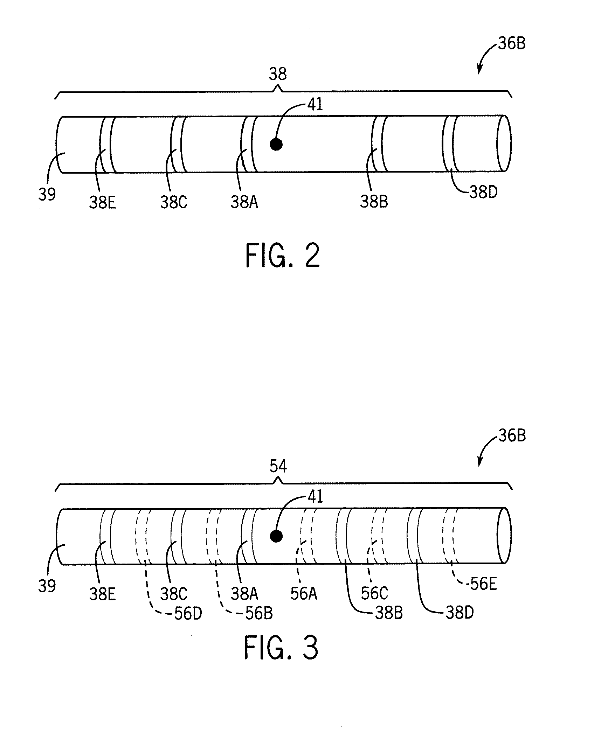

It should be noted that, although the transmitter toroid antennas 38 of this disclosure are described by way of example in a logging-while-drilling (LWD) configuration, any other suitable means of conveyance may be employed (e.g., wireline, slickline, coiled tubing, and so forth). Moreover, the particular application of the transmitter toroid antennas 38 may vary. Using the transmitter toroid antennas 38 to determine resistivity is described here by way of example as one way the transmitter toroid antennas 38 may be used. One example of the LWD configuration appears in FIG. 2, which illustrates an example of the transmitter toroid antennas 38 mounted on the drill collar 39, as shown in FIG. 1, in an asymmetrical configuration to form the LWD tool 36B. The transmitter toroid antennas 38 illustrated FIG. 2 include five transmitter toroid antennas 38A, 38B, 38C, 38D, and 38E mounted on either side of the receiver 41. As illustrated, the transmitter toroid antennas 38A, 38C, and 38E are located on one side of the receiver 41 while the transmitter toroid antennas 38B and 38D are located on the opposite side of the receiver 41. Further, each of the transmitter toroid antennas 38A-38E are positioned at different distances from the receiver 41. Accordingly, the transmitter toroid antennas 38A-38E are asymmetrical in that three are disposed on one side of the receiver 41 and two are disposed on the opposite side of the receiver 41, and none of the transmitter toroid antennas 38A-38E are located at the same distance from the receiver 41 as a transmitter toroid antenna 38A-38E located on an opposite side of the receiver 41. Further, in some embodiments, a distance from the receiver 41 of one of the transmitter toroid antennas (respectively 38B, 38C, and 38D) may be greater than a distance from the receiver 41 of one of the transmitter toroid antenna (respectively 38A, 38B and 38C) disposed on the other side of the receiver and less than a distance from receiver 41 of the another transmitter toroid antenna (respectively 38C, 38D and 38E) also disposed on the other side of the receiver. Furthermore, in some embodiments, the transmitter toroid antennas 38A-38E may generally be spaced equally from each other on the two sides of the receiver 41. Additionally, while five transmitter toroid antennas 38A-38E are illustrated along the drill collar 39, it may be appreciated that the LWD tool 36B may include any number of the transmitter toroid antennas 38 greater than two positioned along the drill collar 39.

Further, the receiver 41 of FIG. 2 is illustrated as a button electrode. The button electrode, operating as the receiver 41, is an electrode that may be electrically isolated from a remainder of the drill collar 39. Additionally, the receiver 41 may also be a receiver ring similarly electrically isolated from the drill collar 39, but positioned around the drill collar 39 in a manner similar to the transmitter toroid antennas 38. The axial position of such a ring would remain substantially the same as the position of the button electrode. Additionally, the receiver ring may include a portion of the drill collar 39 in place of an additional ring placed around the drill collar 39. When one of the transmitter toroid antennas 38A-38E is fired (e.g., when one of the transmitter toroid antennas 38A-38E transmit a signal), a radial current is generated that flows into the geological formation 12. More precisely, an axial current flows along the collar under the toroid, flows into the geological formation and then returns to the collar. It is designated as a radial current when it flows into the formation and returns. The receiver 41 directly measures such currents to provide information about the geological formation 12 (e.g., when both transmitters 38A and 38B emit the signal, whether at the same or a different time, the receiver 41 may measure the signals from the transmitter toroid antenna 38A and from the transmitter toroid antenna 38B). From a linear superposition of the radial current measured at the receiver 41, the electrical resistivity of the geological formation 12 may be determined.

For example, the following equation may be used to determine the electrical resistivity of the geological formation 12 using the LWD tool 36B illustrated in FIG. 2 with the button electrode:

$$Conductance_{Button} = \frac{T_iB*T_jR_l+T_jB*T_iR_l}{T_iR_j*V_{T_i}} \qquad \text{(Equation 1),}$$

where $T_iB$ and $T_jB$ are the currents received on the receiver 41 (B) from two of the transmitter toroid antennas 38A-38E (e.g., transmitters $T_i$ and $T_j$); $T_jR_l$, $T_iR_l$, and $T_iR_j$ are currents received at transmitter toroid antennas 38 (e.g., $R_l$ and $R_j$) operating as receiver antennas while the respective transmitters $T_i$ and $T_j$ are fired; and $V_{T_i}$ is a voltage measured across one of the transmitter toroid antennas 38A-38E when that transmitter toroid antenna 38 (e.g., $T_i$) is fired. Resistivity is subsequently determined from the conductance as the inverse of resistance is conductance and resistivity may be determined from resistance as known by the one of ordinary skill. Additionally, the receiver antenna, $R_l$, is used to focus the current measurement to reduce axial current received by the button electrode operating as the receiver 41. The result when the five transmitter toroid antennas 38A-38E are used for measuring the electrical resistivity of the geological formation is four azimuthal focused measurements measured at the receiver 41. A receiver ring antenna may be utilized in place of the button electrode as the receiver 41. The estimator would remain the same.

The collar situated between two toroid antennas may also be used as the receiver. In this case, conductance is obtained from the following equation, by measuring the current received by the two toroid antennas surrounding the receiving portion of the collar $Conductance_{Ring}$ = 0.5 *

$$\frac{(T_iR_2-T_iR_1)*(T_jR_2+T_jR_1)+(T_jR_2-T_jR_1)*(T_iR_2+T_iR_1)}{T_iR_j*V_{T_i}}$$

$$\text{(Equation 2),}$$

where $R_1$ and $R_2$ are the toroid antennas 38 operating as receivers, in particular, the antennas 38A and 38B closest to the middle. Other pairs of antenna may be chosen as receivers but they should not be separated by any other toroid antenna. $T_i$ and $T_j$ are two of the transmitter toroid antennas 38C-38E that are fired for each resistivity measurement, the TR combinations represent the current measured by each of the receivers when the notated transmitter toroid antennas 38A-38E are fired ($T_iR_2$ being, for instance, the current measured by $R_2$ when toroid antenna $T_i$ transmits), and $V_{T_i}$ is a voltage across one of the transmitter toroid antennas 38A-38E when that transmitter toroid antenna 38 (e.g., $T_i$) is fired: The resulting resistivity of the formation may be determined from the inverse of the conductance. The resistivity is a non-azimuthal focused resistivity measurement. Because two of the five toroid antennas 38A-38E are used as receivers, and three of the five toroid antennas 38A-38E are used as transmitters, this method produces two "ring type" measurements at the receiver 41.

To increase a number of resistivity measurements at the receiver 41 while using the same mechanical and electrical architecture as the LWD tool 36B described above, FIG. 3 includes the LWD tool 36B and a set 54 of the five transmitter toroid antennas 38A-38E and five virtual transmitter antennas 56A-56E. The virtual transmitter antennas 56A-56E are configured to be disposed along the drill collar 39 in positions opposite and symmetrical to the transmitter toroid antenna 38A-38E counterparts. For example, the transmitter toroid antenna 38A is positioned the same distance from the receiver 41 as the virtual transmitter antenna 56A, the transmitter antenna 38B is positioned the same distance from the receiver 41 as the virtual transmitter antenna 56B, and so on up to a symmetrical pair of the transmitter toroid antenna 38E and the virtual transmitter antenna 56E.

Further, the virtual transmitter antennas 56A-56E are not actual devices that are set on the tool, but may be derived from interpolation or extrapolation of real measurements coming from two or more toroid-to-button currents or toroid-to-toroid currents. Using the virtual transmitter antennas 56A-56E enables new focused resistivity measurements using the transmitter toroid antenna 38 and virtual transmitter antenna 56 pairs. For example, as discussed above, absent the virtual transmitter antennas 56A-56E, with a total of N transmitter toroid antennas 38 and a receiver button or ring 41, N-1 azimuthal resistivity measurements are available. With the addition of the virtual transmitter antennas 56, at least N azimuthal resistivity measurements are available using the LWD tool 36B.

For the purpose of the disclosure, the transmitter toroid antennas 38A-38E are designated $T_1$-$T_5$, respectively, when acting as transmitters, and $R_1$-$R_5$ when acting as receivers. The virtual transmitter antennas 56A-56E are designated $T'_1$-$T'_5$, respectively, when acting as transmitters.

A virtual current provided by the virtual transmitter antennas 56 may be determined in two ways. First, for the virtual transmitter antennas 56B, 56C, and 56D, where the virtual transmitter antennas 56 are disposed between two transmitter toroid antennas 38, the following equation may be used to define the current received at the receiver 41 from the virtual transmitter antennas 56:

$$TB = f(T_iB, T_jB) = T_iB + \frac{x - x_{T_i}}{x_{T_i} - x_{T_j}}(T_iB - T_jB) \qquad \text{(Equation 3)},$$

where $T_i$ and $T_j$ are two of the transmitter toroid antennas 38A-38E; B is the receiver 41; $x_{T_i}$ is a location along a tool axis of the transmitter $T_i$; $x_{T_j}$ is a location along the tool axis of the transmitter $T_j$; T is one of the virtual transmitter antennas 56B, 56C, and 56D; x is a location along the tool axis of the virtual transmitter antenna 56B, 56C, or 56D; and $T_iB$ and $T_jB$ are the current measurements obtained by the receiver 41 when current is generated by the respective transmitters $T_i$ and $T_j$. Additionally, for the virtual transmitter antennas 56A and 56E obtained by extrapolation due to not being located between two of the transmitter toroid antennas 38A-38E, the following equation may be used to define the current received at the receiver 41 for the virtual transmitter antennas 56A and 56E:

$$TB = g(T_iB, T_jB, T_kB) = T_iB + \frac{x - x_{T_i}}{x_{T_j} - x_{T_k}}(T_jB - T_kB) \qquad \text{(Equation 4)},$$

where $T_k$ is an additional one of the transmitter toroid antennas 38 transmitting a current to the receiver 41. Further, the following equation may define the currents received at any of the transmitter toroid antennas $R_k$ 38A-38E when any of the virtual transmitter antennas 56A-56E T are transmitting:

$$TR_k = f\left(T_i R_k, T_j R_k\right) = T_i R_k + \frac{x - x_{T_i}}{x_{T_i} - x_{T_j}}\left(T_i R_k - T_j R_k\right) \qquad \text{(Equation 5),}$$

Additionally, $TR_k$, $T_i R_k$ or $T_j R_k$ expressed in Equation 5 may refer to logarithms of the currents received at $R_k$ when $T$, $T_i$ or $T_j$ transmit signals respectively. The logarithm of the current received at $R_k$ when $T$ transmits a signal may be understood as a linear combination of two other logarithms of currents emitted by $T_i$ and $T_j$ and received on $R_k$. For the virtual transmitter antenna 56B, a possible combination is shown in Table 1, below:

Table 1.

| | Toroid-to-Toroid currents | Toroid-to-Button currents |
|---|---|---|
| $T_2'$ | $\begin{cases} T_2'R_1 = f(T_3 R_1, T_5 R_1) \\ T_2'R_2 = f(T_1 R_2, T_3 R_2) \\ T_2'R_3 = f(T_1 R_3, T_5 R_3) \\ T_2'R_4 = f(T_1 R_4, T_3 R_4) \\ T_2'R_5 = f(T_1 R_5, T_3 R_5) \end{cases}$ | $T_2'B = f(T_1 B, T_3 B)$ |

Additionally, it may be appreciated that there may be other linear combinations of the transmitter toroid antennas 38A-38E that may provide an equivalent response. For example, $T_2'B$ may also be obtained with the transmitters $T_3$ and $T_5$. However, it may be desirable to utilize the two transmitter toroid antennas 38 closest to the virtual transmitter antenna 56, and on the same side of the receiver 41 as the virtual transmitter antenna 56, to perform the linear combination. Further, in some situations, the virtual transmitter antenna 56 may be generated by two of the transmitter toroid antennas 38 located closer to the receiver 41 than the virtual transmitter antenna 56. For example, the virtual transmitter antenna 56E may be generated by using current measurements from the transmitter toroid antennas 38B and 38D.

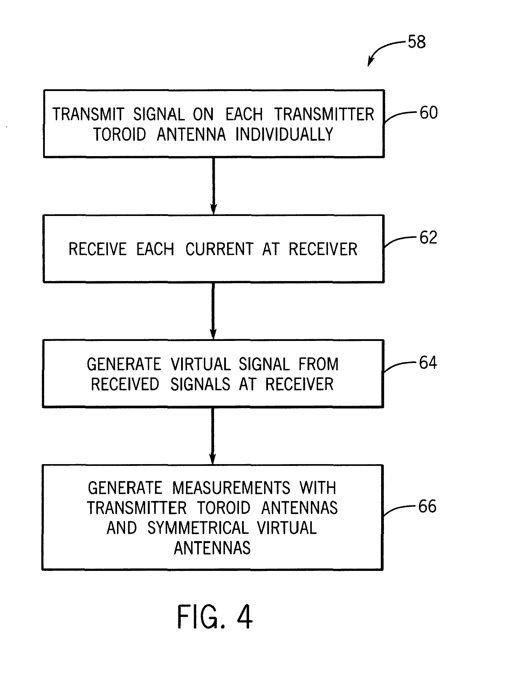

When using the virtual transmitter antennas 56A-56E in combination with the transmitter toroid antennas 38A-38E, five focused measurements may be derived instead of the four measurements described above in relation to FIG. 2. To help illustrate, FIG. 4 is a flowchart of a method 58 for generating the focused measurements at the receiver 41 when the transmitter toroid antennas 38 are fired individually. Initially, at block 60, the transmitter toroid antennas fire signals one at a time. By firing the signals one at a time, the receiver 41 and/or a transmitter toroid antenna 38 operating as a receiver receive each of the currents generated by the transmitter toroid antennas 38A-38E one at a time at block 62. The data processing system 44 may store the current values received at the receiver 41 in a matrix as each of the transmitter toroid antennas 38A-38E are fired. The stored current values in the matrix may be called upon when the values are utilized, for example, in determining current values associated with virtual transmitter antennas 56A-56E. Because the signals are fired and the currents are received one at a time, a limited processing cost is utilized to determine what current value is attributable to each of the transmitter toroid antennas 38A-38E. Further, it may be appreciated that in an embodiment in which a transmitting toroid antenna 38 operates as a receiver when some of the transmitter toroid antennas 38 are fired, the transmitting toroid antenna 38 may also operate as a transmitter at a later time when another transmitting toroid antenna 38 is available for operation as a receiver.

Subsequently, virtual signals originating from the virtual transmitter antennas 56A-56E are determined at block 64. As discussed above, the virtual signal may be generated with Equation 3, 4, or 5. Also, as discussed above, it may generally be desirable to calculate the virtual signal with the current values received by the receiver 41 that originated from the two transmitter toroid antennas 38A-38E positioned closest to an intended virtual transmitter antenna 56 location along the drill collar 39. In this manner, a more accurate representation of the virtual transmitter antenna 56 may be obtained than if two transmitter toroid antennas 38A-38E further away from the intended virtual transmitter antenna 56 location were utilized. However, it should also be noted that, while it may be desirable to use the two transmitter toroid antennas 38A-38E closest to the virtual transmitter antenna 56, any of the transmitter toroid antennas 38A-38E may be used for determining the virtual signal of any of the virtual transmitter antennas 56A-56E. For example, using Equations 3, 4, or 5, two of the transmitter toroid antennas 38A-38E not located closest to the virtual transmitter antenna 56 may be used to determine the virtual signal of the virtual transmitter antenna 56.

After the virtual signals are determined, electrical resistivity measurements of the geological formation 12 are generated from the transmitter toroid antennas 38A-38E and the symmetrical virtual transmitter antennas 56A-56E at block 66. The following equation may be used for the electrical resistivity measurement with a button electrode utilized as the receiver 41:

$$Conductance_{ButtonSym} = \frac{T_iB \times T_i'R_0 + T_i'B \times T_iR_0}{T_i'R_i \times V_{T_i}} \qquad \text{(Equation 6),}$$

where $R_0$ is a virtual toroid receiver utilized for focusing purposes. The focusing toroid receiver, $R_0$, may rely on two transmitter toroid antennas 38 acting as receivers closest to a firing transmitter toroid antenna 38 and its symmetrical virtual transmitter antenna 56 (e.g., $R_l$ and $R_k$ in Equation 7, below). The virtual toroid receiver may function to focus the current measurement at the receiver 41 and limit axial current received by the receiver 41. In one example, the equation for determining the current received by the virtual toroid receiver may be:

$$T_i'R_0 = \frac{x_{R_0} - x_{R_k}}{x_{R_l} - x_{R_k}} T_i'R_l + \frac{x_{R_0} - x_{R_l}}{x_{R_k} - x_{R_l}} T_i'R_k \qquad \text{(Equation 7).}$$

Accordingly, Equation 7 represents a linear combination of two of the transmitter toroid antennas 38 operating as receivers with the combination weighted based on a distance between the virtual toroid antennas 56 and the transmitter toroid antennas 38 operating as receivers.

Azimuthal resistivity measurements thanks to Equation 6 for transmitter toroid antennas 38A-38E may result in five resistivity measurements focused at the receiver 41.

Additionally, the following equation may be used for the non-azimuthal electrical resistivity measurement:

$$Conductance_{RingSym} = 0.5 \times \frac{(T_iR_2 - T_iR_1) \times (T_i'R_2 + T_i'R_1) + (T_i'R_2 - T_i'R_1) \times (T_iR_2 + T_iR_1)}{T_i'R_i \times V_{T_i}}$$

$$\text{(Equation 8),}$$

where $R_1$ and $R_2$ are the transmitter toroid antennas 38 operating as receivers, in particular, the antennas 38A and 38B closest to the receiver 41. Non-azimuthal resistivity measurements between receiving antennas $R_1$ and $R_2$ and thanks to Equation 8 may result in three resistivity measurements.

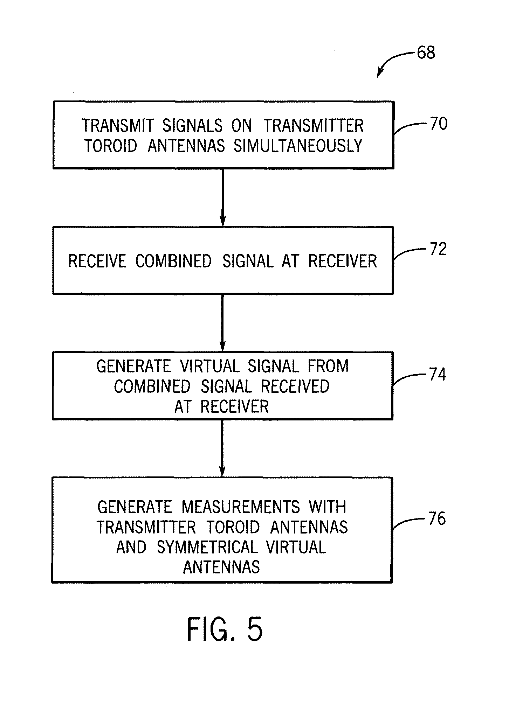

Alternatively, FIG. 5 is a flow chart for a method 68 of generating the focused measurements at the receiver 41 when two or more transmitter toroid antennas 38 are fired simultaneously. Initially, at block 70, two or more transmitter toroid antennas 38 transmit signals at the same time. For example, the two transmitter toroid antennas 38 that are utilized to generate the virtual signal of the virtual transmitter antenna 56 (i.e., the two transmitter toroid antennas 38 closest to a location of the virtual transmitter antenna 56) may be fired simultaneously.

Once the transmitter toroid antennas 38 are fired, a combined signal is received by the receiver 41 at block 72. The combined signal received by the receiver 41 may include a superposition of the currents generated by the two or more transmitter toroid antennas 38 fired simultaneously. For example, the magnitude of the currents from each of the transmitter toroid antennas 38 is added together to form the individual combined current that is received at the receiver 41.

Subsequently, at block 74, virtual signals originating from the virtual transmitter antennas 56A-56E are generated. As discussed above, the virtual signals may be generated with Equation 3, 4, or 5 when the transmitter toroid antennas 38 are fired individually. However, because Equations 3, 4, and 5 are weighted linear combinations of the current values transmitted by the transmitter toroid antennas 38, and because the signal received by the receiver 41 at block 72 is a superposition of the current values from the transmitter toroid antennas 38, an equation taking into account a weight of the two simultaneously transmitted signals may be used to determine the virtual signal.

After the virtual signals are determined, electrical resistivity measurements of the geological formation 12 are generated from the transmitter toroid antennas 38A-38E and the symmetrical virtual transmitter antennas 56A-56E at block 76. As discussed above, Equations 6 and 8 may be used for the electrical resistivity measurement with a button electrode or receiver ring utilized as the receiver 41. Accordingly, the method 68 may provide a resistivity measurement process with greater efficiency than the method 58 where the transmitter toroid antennas 38 are fired individually.

These methods are embodiments of methods according to the disclosure. However, the estimation of the resistivity may be based on measurements taken by two of the virtual transmitter antennas 56, for instance, or on transmitter toroid antennas 38 and 56 that are not symmetric.

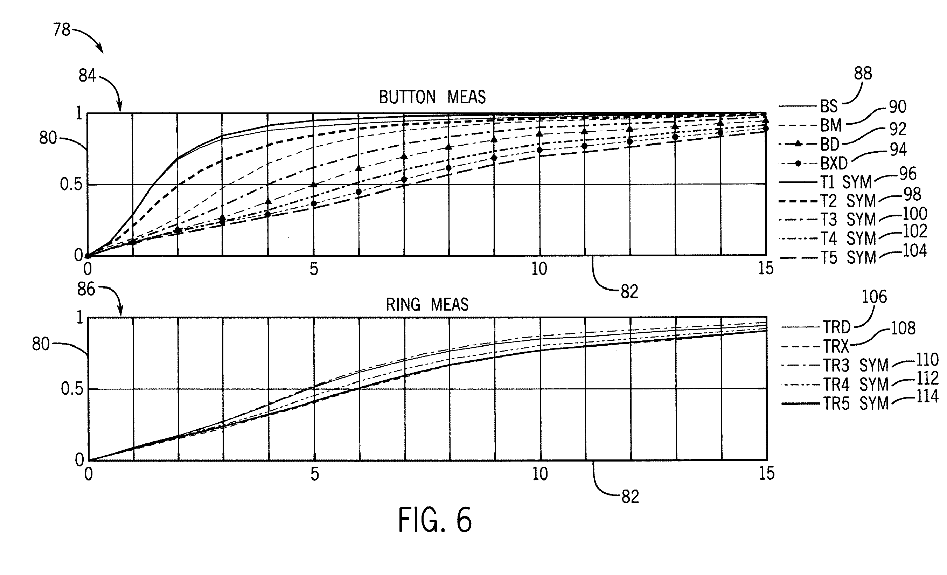

While it may be generally beneficial to have an additional measurement (e.g., five measurements instead of four measurements), the results of the measurements may also provide additional depth of investigations with the addition of the virtual transmitter antennas 56. Accordingly, FIG. 6 is a graph 78 of a response 80 of the LWD tool 36B illustrated in FIG. 3 as a function of invasion radius 82 into the geological formation 12 in either an azimuthal resistivity plot 84 or a non-azimuthal toroid resistivity plot 86. For the azimuthal resistivity plot 84 and the non-azimuthal toroid resistivity plot 86, the radius of invasion 82 from the wellbore 26 is illustrated from 0 inches to 15 inches. The vertical axis provides information on the ratio of the response due to the mud that invaded the formation, 0 showing a measurement for which mud has no influence and 1 a measurement wherein the totality of the measurement is due to the mud. Additionally, a response value of 0.5 provides a depth of investigation for each of transmitter arrays 88, 90, 92, 94, 96, 98, 100, 102, and 104. For example, the depth at which the transmitter arrays 88-104 intersect a response of 0.5 is the radius of invasion 82 at which the particular transmitter array 88-104 operates. In the azimuthal resistivity plot 84, the transmitter arrays 88-94 represent the radius of invasion 82 of the LWD tool 36B illustrated in FIG. 2 absent utilization of the virtual transmission antennas 56. Further, the transmitter arrays 96-104 represent the radius of invasion 82 of the LWD tool 36B illustrated in FIG. 2 including the utilization of the virtual transmission antennas 56.

As illustrated in the azimuthal resistivity plot 84, the utilization of the virtual transmission antennas 56 adds an additional array and increases a radial sensitivity of the electrical resistivity measurement. For example, five different depths of investigation are available when using the virtual transmission antennas 56: approximately 1.5 inches, 2 inches, 4 inches, 6 inches, and 7.5 inches. Additionally, the shallowest transmitter array 96 using the virtual transmission antennas 56 is slightly shallower than the transmitter array 88 not using the virtual transmission antennas 56. Further, in a deeper zone, the deepest transmitter array 114 using the virtual transmission antennas 56 also penetrates the geological formation 12 to a slightly greater depth than the deepest transmitter array 94 not using the virtual transmission antennas 56. Between the two extremes, the transmitter arrays 98-102 also provide greater radial sensitivity than the transmitter arrays 90 and 92, which do not utilize the virtual transmission antennas 56. Accordingly, the utilization of the virtual transmitter arrays may enhance output results in shallow measurements of the geological formation 12.

Further, as illustrated in the non-azimuthal toroid resistivity plot 86, the utilization of the virtual transmitter antennas 56 provides increased resistivity measurement radial sensitivity in a medium distance from the wellbore 26 (i.e., around 5 inches from the wellbore 26). Accordingly, the virtual transmitter antennas 56 provide a greater span of the radial sensitivity than using only the toroid transmitter antennas 38.

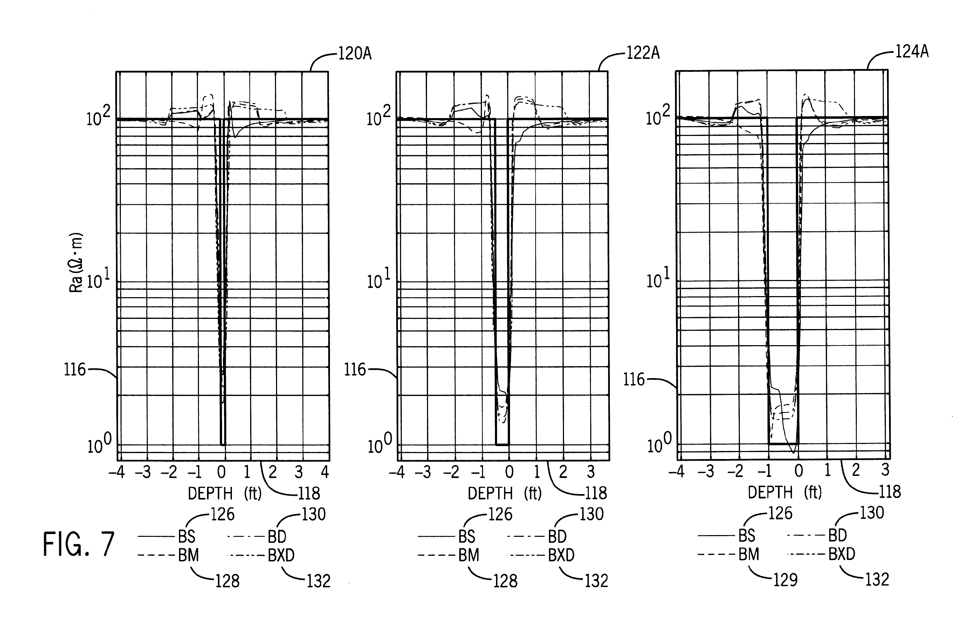

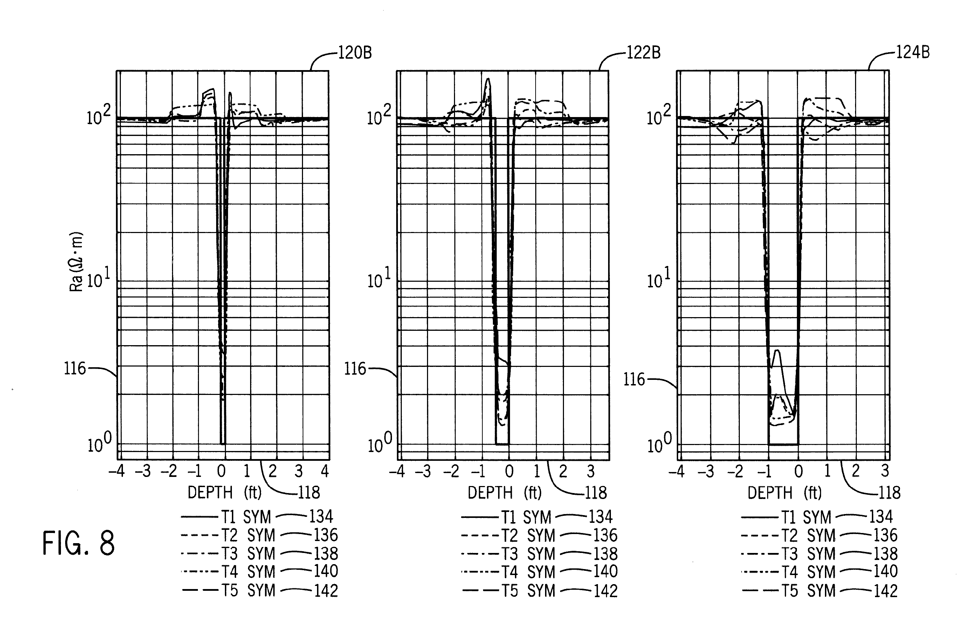

In another example comparing the electrical resistivity measurements of the LWD tool 36B with and without the utilization of the virtual transmitter antennas 56, FIGS. 7 and 8 include sets of graphs illustrating electrical resistivity 116 as a function bed thickness 118. Further, FIGS. 7 and 8 illustrate potential differences between standard focused measurement plots 120A, 122A, and 124A and symmetrical focused measurement plots 120B, 122B, and 124B. The differences between the standard focused measurement plots 120A, 122A, and 124A and the symmetrical focused measurement plots 120B, 122B, and 124B could illustrate how a scheme using the virtual transmitter antennas 56 reacts with respect to bed contrast effects compared to a scheme not using the virtual transmitter antennas 56. For example, FIG. 7 illustrates the standard focused measurements in the geological formation 12 with depths of 2 inches, 6 inches, and 12 inches respectively. That is, plots 120A, 122A, and 124A illustrate the electrical resistivity measurements at 2 inches, 6 inches, and 12 inches with the LWD tool 36B illustrated in FIG. 2.

As discussed above, the focused measurements may include four measurements when five of the transmitter toroid antennas 38 are disposed along the drill collar 39, as in FIG. 2. In a focus scheme, electrical resistivity measurements at short range 126, mid range 128, deep range 130 and extra deep range 132 are not greatly affected by bed contrast effects. That is, with a relatively deep bed (e.g., 12 inches) or a relatively shallow bed (e.g., 2 inches), the electrical resistivity measurements are not greatly affected. This is apparent from the electrical resistivity measurements 126, 128, 130, and 132 that are relatively stable for all three of the plots 120A, 122A, and 124A.

On the other hand, FIG. 8 includes plots 120B, 122B, and 124B illustrating behavior of the symmetrical focused measurements that utilize the virtual transmitter antennas 56 at depths of 2 inches, 6 inches, and 12 inches, respectively. As illustrated, in using the virtual transmitter antennas 56, five electrical resistivity measurements 134, 136, 138, 140, and 142 are available. For example, one resistivity measurement is available for each of the transmitter toroid antennas 38A-38E paired with the symmetrical virtual transmitter antennas 56A-56E. Additionally, when compared with the focused plots 120A, 122A, and 124A, the reactions to the bed contrast effects are similar for both the focused scheme and the symmetrical focused scheme. Accordingly, an enhanced electrical resistivity radial sensitivity that accompanies an addition of the virtual transmitter antennas 56 to the transmitter toroid antennas 38 does not appreciably alter performance of the LWD tool 36B in relation to a vertical response of the LWD tool 36B.

The specific embodiments described above have been shown by way of example, and it should be understood that these embodiments may be susceptible to various modifications and alternative forms. It should be further understood that the claims are not intended to be limited to the particular forms disclosed, but rather to cover modifications, equivalents, and alternatives falling within the spirit and scope of this disclosure.

For example, some embodiments may include:

A downhole electrical resistivity measurement tool comprising:

at least a first, a second, and a third transmitter antenna mounted on a body, each of the transmitter antennas able to generate a current signal;

at least a receiver mounted on the body, wherein at least two of the transmitter antennas are mounted asymmetrically on either side of the receiver; and

a data processing system configured to generate at least a virtual transmitter antenna positioned symmetrically and opposite the receiver for at least the first transmitter antenna, wherein the virtual transmitter antennas provide data equivalent to current signals generated by a transmitter antenna at symmetrically opposite positions of the first transmitter antenna.

Another embodiment may include a downhole electrical resistivity measurement tool comprising:

at least a first, a second, and a third transmitter antenna mounted on a body;

at least a receiver mounted on the body for measuring currents generated by the transmitter antennas; and

a data processing system configured to :

- generate from a linear combination of current measurements generated by the second and the third transmitter antennas and received by the receiver, at least a first virtual transmitter antenna at a corresponding virtual location on the body, wherein the first virtual transmitter antenna provides data equivalent to current signals generated by an additional transmitter antenna at the virtual location and received by the receiver, and

- estimate a resistivity of a geological formation as a function of the current measurements generated by two antennas, including the first virtual transmitter antenna.

The data processing is configured to estimate a resistivity as a function of the first transmitter antenna and the first virtual transmitter antenna.

The data processing is configured to estimate a resistivity as a function of the first virtual transmitter antenna and a second virtual transmitter antenna generated from a linear combination of current measurements generated by two antennas including the first transmitter antenna.

The second and third antennas are located closest to the virtual location of the first virtual transmitter antenna.

The downhole tool may comprise a reference receiver, wherein the second and third transmitter antennas may be located on a same side of the reference receiver as the virtual location of the first virtual transmitter antenna.

The first virtual transmitter antenna may be further from the reference receiver than the second and the third transmitter antennas.

Current measurements, TR, generated by the first virtual transmitter antenna and received by a receiver may be determined from the following equation:

$$TR = f\left(T_i R, T_j R\right) = T_i R + \frac{x - x_{T_i}}{x_{T_i} - x_{T_j}}\left(T_i R - T_j R\right)$$

wherein T is the first virtual transmitter antenna, $T_i$ and $T_j$ are the second and the third transmitter antennas, R is the receiver, and $T_i R$ and $T_j R$ are the current measurements obtained by the receiver when current is generated by the respective second and third transmitters, x is the virtual location, and $x_{T_i}$ and $x_{T_j}$ are respective locations of the second and third transmitter antennas.

The downhole tool may comprise the reference receiver, wherein the at least first, second, and third transmitter antennas are mounted asymmetrically on either side of the reference receiver, and wherein the virtual location corresponds to a position symmetrical of the first transmitter position relative to the reference receiver.

At least one of the transmitter antennas may be utilized as a receiver.

The data processing system may also be configured to generate, from a linear combination of current measurements generated by one of the transmitter antennas and received by two of the transmitter antennas utilized as receivers, at least a focusing receiver at a corresponding focusing location on the body, wherein the focusing receiver provides data equivalent to current measurements generated by the transmitter antenna and received by a receiver at the focusing location.

The focusing location may correspond to a location of the reference receiver.

Current measurements, $T_iR_0$, generated by a transmitter antenna $T_i$ and received by the focusing receiver $R_0$, may be determined from the following equation:

$$T_iR_0 = \frac{x_{R_0} - x_{R_k}}{x_{R_l} - x_{R_k}} T_iR_l + \frac{x_{R_0} - x_{R_l}}{x_{R_k} - x_{R_l}} T_iR_k$$

wherein $R_l$ and $R_k$ are the two transmitter antennas acting as receivers, $T_iR_l$ and $T_iR_k$ are current measurements obtained respectively by $R_l$ and $R_k$ when a current is generated by transmitter antenna $T_i$, $x_{R_0}$ is the focusing location and $x_{R_l}$ and $x_{R_k}$ are respective locations of $R_l$ and $R_k$.

At least one of the second or the third transmitter antennas may be used as a receiver for generating the focusing receiver.

The estimator may be a conductance of the geological formation, which is the invert of the resistance of the formation, from which the resistivity may be determined.

The data processing system may be configured to estimate the resistivity with the following estimator:

$$Estimator = \frac{T_iB \times T_i'R_0 + T_i'B \times T_iR_0}{T_i'R_i \times V_{T_i}}$$

wherein B is a receiver, $R_0$ is the focusing receiver, $T_i$ is the first transmitter antenna and $T_i'$ is the first virtual transmitter antenna, $T_iB$, $T_i'B$, $T_iR_0$, $T_i'R_0$ the current measurements obtained respectively by B and $R_0$ when a current is generated by the first transmitter antenna $T_i$, and the first virtual transmitter antenna $T'_i$, and $V_{T_i}$ is a voltage measured across the first transmitter antenna when the current is generated.

The data processing system may be configured to estimate the resistivity with the following equation:

$$Estimator = 0.5 \times \frac{(T_iR_2 - T_iR_1) \times (T_i'R_2 + T_i'R_1) + (T_i'R_2 - T_i'R_1) \times (T_iR_2 + T_iR_1)}{T_i'R_i \times V_{T_i}}$$

wherein $R_1$ and $R_2$ are transmitter antennas utilized as receivers, $T_i$ is the first transmitter antenna and $T_i'$ is the first virtual transmitter antenna, $T_iR_1$, $T_iR_2$, $T_i'R_1$, $T_i'R_2$ are the current measurements obtained respectively by $R_1$ and $R_2$ when a current is generated by the first transmitter antenna $T_i$ and the first virtual transmitter $T'_i$, and $V_{T_i}$ is a voltage measured across the first transmitter antenna when the current is generated.

The tool may comprise a controller for controlling transmitter antennas, and the controller may be configured to fire the transmitter antennas individually.

The controller may also comprise storage for storing the obtained current measurements.

The transmitter antennas positioned on a same side of the receiver may be equally spaced from each other.

The receiver may be a button electrode.

The receiver may be a ring electrode.

The transmitter antennas may be toroid antennas.

The body may be a drill collar, and the tool may be a logging-while-drilling tool.

The data received by the receiver may be transmitted via any conveyance means.

The disclosure also relates to a method comprising:

placing a downhole tool in a wellbore in a geological formation, wherein the downhole tool may comprise at least a first, a second, and a third transmitter antenna mounted on a body, and at least one receiver mounted on the body for measuring currents generated by the transmitter antennas;

firing the transmitter antennas to generate transmitter currents;

measuring the transmitter currents at the at least one receiver;

generating virtual signals from a linear combination of transmitter currents generated by the second and the third transmitter antennas and received by the receiver, the virtual signals representing a first virtual transmitter providing data equivalent to current signals generated by an additional transmitter antenna situated at a corresponding virtual location on the body antenna; and

estimating electrical resistivity of the geological formation as a function of current measurements generated by two antennas, including the first virtual transmitter antenna.

The disclosure also relates to a method comprising:

placing a downhole tool in a wellbore in a geological formation, wherein the downhole tool may comprise a first, a second, and a third transmitter antenna mounted on a body, and at least one receiver mounted on the body, wherein the first and the third transmitter antennas are mounted on an opposite side of the receiver and asymmetrically from the second transmitter antenna;

firing the transmitter antennas to generate transmitter currents;

measuring the transmitter currents at the at least one receiver; and

generating virtual signals from the transmitter currents representing virtual transmitter antennas to provide symmetry to the transmitter antennas mounted asymmetrically on opposite sides of the at least one receiver.

The methods may be used in combination.

Any of the methods may comprise generating a virtual receiver using a linear combination of two current measurements from the first and the second transmitter antennas, wherein the at least one receiver is a button electrode, and wherein the virtual receiver reduces axial current experienced by the receiver.

Any of the methods may also comprise focusing an electrical resistivity measurement in a middle portion of the first and the second transmitter antennas, which are positioned closest to the receiver, wherein the receiver is a portion of the body between the transmitter toroid antennas positioned closest to the receiver.

Firing the transmitter antennas may comprise firing the first, the second, and the third transmitter antennas in succession, and receiving the transmitter currents may comprise storing a matrix of the current measurements received by the at least one receiver.

Any of the methods may comprise storing a matrix of the current measurements received by the at least one receiver with a data processing system.

The disclosure also relates to a logging while drilling system, comprising:

at least two transmitter toroid antennas and a receiver mounted on a drill collar, wherein the transmitter toroid antennas are mounted asymmetrically on each side of the receiver; and

a data processing system configured to:

receive current measurements from the receiver generated by the transmitter toroid antennas;

generate virtual signals to represent virtual transmitter antennas and provide symmetry to the transmitter toroid antennas ; and

generate a number of electrical resistivity measurements of a geological formation equal to a number of the transmitter toroid antennas via symmetrical pairs of the current measurements and the virtual signals.

Symmetry may be obtained relative to the receiver.

Two current measurements from the transmitter toroid antennas may be linearly combined to generate a virtual receiver, wherein the receiver is a button electrode, and wherein the virtual receiver reduces axial current experienced by the receiver.

The receiver may be a portion of the drill collar between the transmitter toroid antennas positioned closest to the receiver, and wherein the receiver focuses an electrical resistivity measurement in the middle of the transmitter toroid antennas positioned closest to the receiver.

The transmitter toroid antennas may each fire in succession and the data processing system may store a matrix of the current measurements received by the receiver.

The current measurements stored in the matrix may be called to contribute to generation of the virtual signals.

**Claims**

1. A downhole electrical resistivity measurement tool, comprising:

   at least a first, a second, and a third transmitter antenna mounted on a body;
   at least a receiver mounted on the body for measuring currents generated by the transmitter antennas; and
   a data processing system configured to:

   - generate from a linear combination of current measurements generated by the second and the third transmitter antennas and received by the receiver, at least a first virtual transmitter antenna at a corresponding virtual location on the body, wherein the first virtual transmitter antenna provides data equivalent to current signals generated by an additional transmitter antenna at the virtual location and received by the receiver, and
   - estimate a resistivity of a geological formation as a function of the current measurements generated by two antennas, including the first virtual transmitter antenna.

2. The downhole tool of claim 1, wherein the second and the third transmitter antennas are located closest to the virtual location of the first virtual transmitter antenna.

3. The downhole tool of claim 1 or 2, comprising a reference receiver, wherein the second and the third transmitter antennas are located on a same side of the reference receiver as the virtual location of the first virtual transmitter antenna.

4. The downhole tool of claims 1 to 3, comprising a reference receiver, wherein the first virtual transmitter antenna is further from the reference receiver than the second and the third transmitter antennas.

5. The downhole tool of any of the preceding claims, wherein current measurements, TR, generated by the first virtual transmitter antenna and received by a receiver is determined from the following equation:

$$TR = f\left(T_i R, T_j R\right) = T_i R + \frac{x - x_{T_i}}{x_{T_i} - x_{T_j}}\left(T_i R - T_j R\right)$$

wherein T is the first virtual transmitter antenna, $T_i$ and $T_j$ are the second and the third transmitter antennas, R is the receiver, and $T_i R$ and $T_j R$ are the current measurements obtained by the receiver when current is generated by the respective second and third transmitters, x is the virtual location, and $x_{T_i}$ and $x_{T_j}$ are respective locations of the second and third transmitter antennas.

6. The downhole tool of any of claims 1 to 5, comprising the reference receiver, wherein the at least first, second, and third transmitter antennas are mounted asymmetrically on either side of the reference receiver, and wherein the virtual location corresponds to a position symmetrical of the first transmitter position relative to the reference receiver.

7. The downhole tool of any of the preceding claims, wherein at least one of the transmitter antennas is utilized as a receiver.

8. The downhole tool of any of the preceding claims, wherein the data processing system is further configured to generate, from a linear combination of current measurements generated by one of the transmitter antennas and received by two of the transmitter antennas utilized as receivers, at least a focusing receiver at a corresponding focusing location on the body, wherein the focusing receiver provides data equivalent to current measurements generated by the transmitter antenna and received by a receiver at the focusing location.

9. The downhole tool of the preceding claims, comprising a reference receiver, wherein the focusing location corresponds to a location of the reference receiver.

10. The downhole tool of any of claims 8 or 9, wherein current measurements, $T_i R_0$, generated by a transmitter antenna $T_i$ and received by the focusing receiver $R_0$, is determined from the following equation:

$$T_i R_0 = \frac{x_{R_0} - x_{R_k}}{x_{R_l} - x_{R_k}} T_i R_l + \frac{x_{R_0} - x_{R_l}}{x_{R_k} - x_{R_l}} T_i R_k$$

wherein $R_l$ and $R_k$ are the two transmitter antennas acting as receivers, $T_iR_l$ and $T_iR_k$ are current measurements obtained respectively by $R_l$ and $R_k$ when a current is generated by transmitter antenna $T_i$, $x_{R0}$ is the focusing location and $x_{R_l}$ and $x_{R_k}$ are respective locations of $R_l$ and $R_k$.

11. The downhole tool of claims 8 to 10, wherein at least one of the second or the third transmitter antennas may be used as a receiver for generating the focusing receiver.

12. The downhole tool of any of claims 8 to 11, wherein the data processing system is configured to estimate the resistivity with the following estimator:

$$Estimator = \frac{T_i B \times T_i' R_0 + T_i' B \times T_i R_0}{T_i' R_i \times V_{T_i}}$$

wherein B is a receiver, $R_0$ is the focusing receiver, $T_i$ is the first transmitter antenna and $T_i'$ is the first virtual transmitter antenna, $T_i B,\ T_i' B, T_i R_0, T_i' R_0$ the current measurements obtained respectively by B and $R_0$ when a current is generated by the first transmitter antenna $T_i$, and the first virtual transmitter antenna $T_i'$, and $V_{T_i}$ is a voltage measured across the first transmitter antenna when the current is generated.

13. The downhole tool of any of the preceding claims, wherein the data processing system is configured to estimate the resistivity with the following estimator:

$$Estimator = 0.5 \times \frac{(T_i R_2 - T_i R_1) \times (T_i' R_2 + T_i' R_1) + (T_i' R_2 - T_i' R_1) \times (T_i R_2 + T_i R_1)}{T_i' R_i \times V_{T_i}}$$

wherein $R_1$ and $R_2$ are transmitter antennas utilized as receivers, $T_i$ is the first transmitter antenna and $T_i'$ is the first virtual transmitter antenna, $T_i R_1,\ T_i R_2,\ T_i' R_1,\ T_i' R_2$ are the current measurements obtained respectively by $R_1$ and $R_2$ when a current is generated by the first transmitter antenna $T_i$ and the first virtual transmitter $T_i'$, and $V_{T_i}$ is a voltage measured across the first transmitter antenna when the current is generated.

14. The downhole tool of any of the preceding claims, wherein the tool comprises a controller for controlling transmitter antennas, configured to fire transmitter antennas individually.

15. A method, comprising:

placing a downhole tool in a wellbore in a geological formation, wherein the downhole tool comprises at least a first, a second, and a third transmitter antenna mounted on a body, and at least one receiver mounted on the body for measuring currents generated by the transmitter antennas;
firing the transmitter antennas to generate transmitter currents;
measuring the transmitter currents at the at least one receiver;
generating virtual signals from a linear combination of transmitter currents generated by the second and the third transmitter antennas and received by the receiver, the virtual signals representing a first virtual transmitter providing data equivalent to current signals generated by an additional transmitter antenna situated at a corresponding virtual location on the body antenna; and

estimating electrical resistivity of the geological formation as a function of current measurements generated by two antennas, including the first virtual transmitter antenna.

FIG. 1

FIG. 2

FIG. 3

—58

TRANSMIT SIGNAL ON EACH TRANSMITTER TOROID ANTENNA INDIVIDUALLY —60

RECEIVE EACH CURRENT AT RECEIVER —62

GENERATE VIRTUAL SIGNAL FROM RECEIVED SIGNALS AT RECEIVER —64

GENERATE MEASUREMENTS WITH TRANSMITTER TOROID ANTENNAS AND SYMMETRICAL VIRTUAL ANTENNAS —66

FIG. 4

68

TRANSMIT SIGNALS ON TRANSMITTER
TOROID ANTENNAS SIMULTANEOUSLY — 70

↓

RECEIVE COMBINED SIGNAL AT RECEIVER — 72

↓

GENERATE VIRTUAL SIGNAL FROM
COMBINED SIGNAL RECEIVED
AT RECEIVER — 74

↓

GENERATE MEASUREMENTS WITH
TRANSMITTER TOROID ANTENNAS
AND SYMMETRICAL VIRTUAL
ANTENNAS — 76

FIG. 5

FIG. 6

FIG. 7

FIG. 8

| | | Europäisches Patentamt European Patent Office Office européen des brevets | **EUROPEAN SEARCH REPORT** | Application Number EP 14 29 0382 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 00/79306 A1 (HALLIBURTON ENERGY SERV INC [US]) 28 December 2000 (2000-12-28)<br>* abstract; claim 1; figures *<br>* page 2, line 32 - page 3, line 3 *<br>* page 4, line 3 - line 29 *<br>* page 5, line 15 - page 6, line 9 *<br>* page 7, line 1 - page 11, line 28 *<br>* page 16, line 17 - page 17, line 24 *<br>----- | 1-5,7-15<br><br>6 | INV.<br>G01V1/30 |
| X | WO 00/50926 A1 (HALLIBURTON ENERGY SERV INC [US]) 31 August 2000 (2000-08-31)<br>* abstract; figures 1-4 *<br>* page 4, line 20 - page 5, line 16 *<br>* page 11, line 9 - page 16, line 10 *<br>----- | 1,15 | |
| A | EP 1 970 733 A1 (SCHLUMBERGER SERVICES PETROL [FR])<br>17 September 2008 (2008-09-17)<br>* the whole document *<br>----- | 1-15 | |
| | | | **TECHNICAL FIELDS SEARCHED (IPC)**<br>G01V |

The present search report has been drawn up for all claims

| Place of search | Date of completion of the search | Examiner |
|---|---|---|
| The Hague | 24 June 2015 | Scappazzoni, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 29 0382

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2015

| Patent document cited in search report | | | Publication date | Patent family member(s) | | Publication date |
|---|---|---|---|---|---|---|
| WO 0079306 | A1 | 28-12-2000 | | CA | 2375432 A1 | 28-12-2000 |
| | | | | EP | 1204887 A1 | 15-05-2002 |
| | | | | NO | 20016278 A | 15-02-2002 |
| | | | | US | 6211678 B1 | 03-04-2001 |
| | | | | WO | 0079306 A1 | 28-12-2000 |
| WO 0050926 | A1 | 31-08-2000 | | CA | 2362542 A1 | 31-08-2000 |
| | | | | EP | 1163539 A1 | 19-12-2001 |
| | | | | EP | 2629122 A2 | 21-08-2013 |
| | | | | NO | 20014055 A | 22-10-2001 |
| | | | | US | 6181138 B1 | 30-01-2001 |
| | | | | WO | 0050926 A1 | 31-08-2000 |
| EP 1970733 | A1 | 17-09-2008 | | AT | 473459 T | 15-07-2010 |
| | | | | BR | PI0801755 A | 04-11-2008 |
| | | | | CA | 2624885 A1 | 13-09-2008 |
| | | | | EP | 1970733 A1 | 17-09-2008 |
| | | | | US | 2009066336 A1 | 12-03-2009 |

EPO FORM P0459

For more details about this annex : see Official Journal of the European Patent Office, No. 12/82